# EUROPEAN PATENT SPECIFICATION

(11) **EP 2 136 054 B1**
(45) Date of publication and mention of the grant of the patent: **07.09.2011**
(21) Application number: 08011027.3
(22) Date of filing: 18.06.2008
(51) Int. Cl.: F02D 13/02, F02D 41/10, F02M 59/10

(54) **Device for controlling the operation of an internal combustion engine**
Vorrichtung zur Steuerung des Betriebs eines Verbrennungsmotors
Dispositif pour contrôler le fonctionnement d'un moteur à combustion interne

(43) Date of publication of application: 23.12.2009
(73) Proprietor: Caterpillar Motoren GmbH & Co. KG, 24157 Kiel (DE)
(72) Inventor: Schlemmer-Kelling, Udo, Dr., 24113 Molfsee (DE)
(74) Representative: Kramer - Barske - Schmidtchen

(56) References cited:
- EP-A- 1 273 795
- EP-A- 1 477 638
- WO-A-2005/116426
- DE-A1- 10 318 008
- DE-C1- 4 216 759
- VOGT R ET AL: "MODERNES MOTORMANAGEMENT ZUR OPTIMIERUNG DES BETRIEBES" SCHIFF UND HAFEN, SEEHAFEN-VERLAG, HAMBURG, DE, vol. 50, no. 3, 1 March 1998 (1998-03-01), pages 56-60, XP000750508 ISSN: 1436-8498
- SCHLEMMER-KELLING U: "MOTORENENTWICKLUNG EMISSIONSARME MAK-DIESELMOTOREN" SCHIFF UND HAFEN, SEEHAFEN-VERLAG, HAMBURG, DE, vol. 55, no. 7, 1 July 2003 (2003-07-01), pages 44-48, XP001209501 ISSN: 1436-8498

## Description

### Technical Field

The present disclosure generally refers to a device for controlling the operation of an internal combustion engine, e.g., a diesel engine which may charged via an exhaust gas turbocharger. In particular, but not exclusively, large diesel or heavy fuel oil engines for large vehicles such as ships, vessels or heavy road vehicles and construction vehicles may be controlled according to the present disclosure.

### Background

Conventional diesel engines, in particular diesel engines used for driving ships or heavy road vehicles and construction vehicles respectively, e.g., charged via exhaust gas turbocharging, may be operated in a "Miller cycle". In the Miller cycle an intake valve may be closed clearly before BDC (bottom dead centre) of a respective piston, whereby peak temperatures developing during the combustion, and, therefore, the formation of nitrogen oxides may be decreased while maintaining a high geometrical compression.

From DE 42 16 759 C1 it is known to operate a charged diesel engine according to the Miller cycle only in an upper load range, and to operate the diesel engine according to a conventional method, wherein the intake valve closes only immediately before or after reaching the BDC, beyond the upper load range. Therefore, the advantages of the Miller cycle method can only be used in a limited load range, and the disadvantages of the Miller cycle method, which lie in an inferior response to increasing load requirements are still present.

WO 2005/ 116426 A, which is the basis of the entering part of appended claim 1, disclosed a method for operation of an internal combustion engine with a supercharger device and with variable inlet valve operation, with regard to the inlet valve timing and/or inlet valve stroke, whereby on recognition of a positive load demand during the supercharger operation, the at least one variable valve operation is controlled such that that a given reserve stroke and/or inlet closing time reserve is used to increase the amount of charged air (air mass).

EP-A-1477638 discloses a variable valve control mechanism including a delay means, which is located between the valves and a rocker arm, and which may be connected during the closing phase of the valves.

EP 1 273 795 A2 discloses an injection pump, which allows to vary an injection time depending on a load of an engine. The injection pump includes a piston, which may be axially moved and rotated around its axis. The rotational movement is controlled by a control rod. The axial movement may be varied by an eccentric means.

From Vogt R. et al: "moderns Motormanagement zur Optimierung des Betriebs" Schiff und Hafen, Seehafen-Verlag, Hamburg, 3/98, page 59, it is known to vary the valve timing of an inlet valve and an exhaust valve and an axial movement of a piston of an injection pump, which are actuated by a camshaft, by supporting rocker arms on an eccentric shaft. The rotational position of the eccentric shaft determines the position of the rotational axis of the rocker arms.

The present disclosure is directed, at least in part to improving one or more aspects of prior systems.

### Summary of the Disclosure

According to one exemplary aspect of the present disclosure, a device for controlling the operation of an internal combustion engine, the inemal combustion engine operating in a first load range and in a second load range, wherein the first load range of the internal combustion engine is defined by 30% to 110% of nominal load, and being provided with at least one intake valve, a camshaft provided with an intake cam and rotationally driven by a crankshaft, an intake valve operating arrangement configured to operate the intake valve and contacting the intake cam, the device comprising: a load detecting device constructed to detect the load of the internal combustion engine, and an adjusting device connected to the load detecting device and configured to adjust the phase between rotation of the camshaft and closing of the intake valve, wherein, in the second load range of the internal combustion engine, the intake valve is closed in a range of 20° to 45° before the BDC of the piston, according to a Miller cycle, and the operation according to the Miller cycle is switched off at least during a part of a load increase within the second load range, is characterized in that the rotationally driven camshaft is provided with a pump cam, the pump cam driving a pump piston of an injection pump via a pump operating arrangement in a reciprocating manner, and the adjusting device is configured to control the phase between injection start of an injection nozzle and the rotation such that injection of the injection valve is started in the range of 0° to 10° before a TDC in the second load range of the internal combustion engine, where the internal combustion engine is controlled according to the Miller cycle, and that the Miller cycle is switched off in a low load range of the internal combustion engine and the injection start of the injection valve is within a range of 10° to 20° before the TDC.

It is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

Although preferred embodiments of this invention have been described herein, improvements and modifications may be incorporated therein without departing from the scope of the following claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:

Fig. 1 shows a schematic diagram of a control device according to the disclosure;

Fig. 2 shows valve lifting curves for explaining the Miller cycle;

Fig. 3 shows a schematic diagram of an injection system, that may be utilized for implementing the method according to the disclosure; and

Fig. 4 shows diagrams for explaining the function of the injection according to Fig. 3.

### Detailed Description

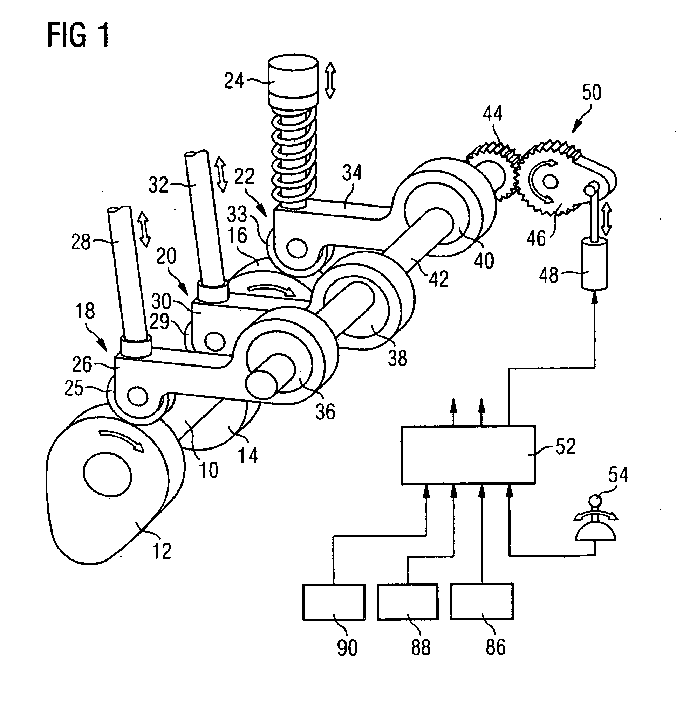

According to Fig. 1, a not illustrated diesel engine, charged via an exhaust gas turbocharger, is provided including, e.g., a camshaft 10 which is preferably formed integrally with, e.g., several cams, here for example an intake cam 12, an outlet cam 14 and a pump cam 16. The intake cam 12 may operate an intake valve that is arranged in an intake in a combustion chamber of a cylinder via, e.g., an intake valve operating arrangement 18. The outlet cam 14 may operate an outlet valve operating arrangement 20 via, e.g., an outlet valve operating arrangement 20. The pump cam 16 may operate a pump piston 24 arranged in an in an injection pump.

The intake valve operating arrangement 18 comprises preferably an intake valve operating lever 26 formed, e.g., as an oscillating arm, which may trace the stroke of the intake cam 12 via, e.g., a roll 25 supported thereon, and may transmit it to the intake valve via, e.g., an intake valve operating lifter 28, in order to operate said intake valve. In a similar manner, the outlet valve operating arrangement 20 may be provided with an outlet valve operating lever 30, which may trace the stroke of the outlet cam 24 via, e.g., a roll 29 supported thereon and transmits it to an outlet valve operating lifter 32. The stroke of the pump cam 16 may be traced by, e.g., a roll 33 arranged at the end of a pump operating lever 34 and transmitted to the pump piston 24 via, e.g., a pressure spring 36.

At their ends facing away from the tracing rolls 25, 29, 33, the levers 20, 30 and 34 may be supported on eccentric disks 36, 38 and 40, which are preferably formed integrally with an eccentric shaft 42 that may be supported on an engine housing (not shown). The eccentricities of the preferably circular cylindrical circumferential surfaces of the eccentric disks 36, 38, 40 relatively to the axis of the eccentric shaft 42, as well as the relative position of the eccentricities relatively to the relative position of the eccentric shaft 42 may be selected individually according to the respective requirements.

In order to adjust the rotational position of the eccentric shaft 42, said eccentric shaft 42 may be connected, e.g., torsionally stiff, to a gearwheel 44 or any other applicable element meshing with, e.g., a teeth of a segmental gearwheel 46, whose rotational position may be adjustable via, e.g., a piston cylinder unit 48. The piston/cylinder unit 48 together with the segmental gearwheel 46 and the gearwheel 48 may form an adjusting device 50. As an alternative, hydraulic or pneumatic cylinders may be used as an longitudinal adjustable element. Also a linear motor or any other technical element may be to rotate the eccentric shaft 42 in an appropriate manner.

For controlling the piston/cylinder unit 48, an electronic control device 52 may be provided, which preferably comprises a micro processor with appropriate program and data memories and which may be provided with several outlets, at least one of said outlets being connected to the piston/cylinder unit 48. The electronic control device 52 is preferably provided with several inlets, one of said inlets being connected with, e.g., a load adjusting element 54, by means of which the load of the not illustrated diesel engine is mechanically pre-selectable or adjustable.

A temperature sensor 86 for detecting the temperature of the diesel engine and a speed sensor 88 for detecting the rotational speed of the crankshaft of the diesel engine may be connected to further inlets of the electronic control unit 52.

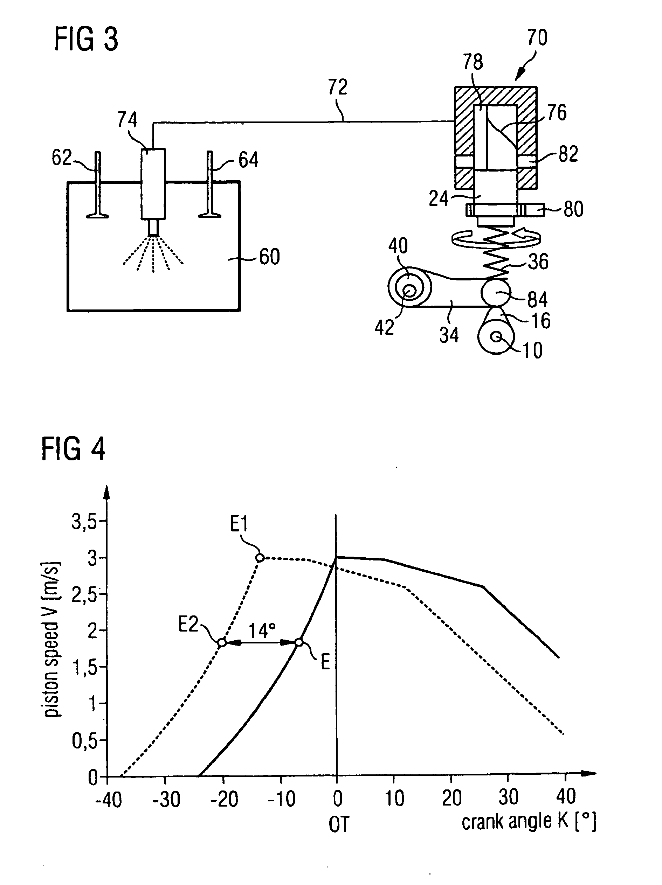

Fig. 3 schematically shows some details of the injection system of a diesel engine including a cylinder 60, an intake valve 62 and an outlet valve 64. According to Fig. 3, an injection pump 70 may be connected to an injection nozzle 74 via a pressure line 72. A pump piston 24 may be provided with a control edge 76 and a longitudinal groove 78. For adjusting the supply rate, the pump piston 24 may be twistable around an axis in parallel to its linear reciprocating movability via, e.g., a control rod 80. Supply bores 82 may be provided to a supply space of the injection pump 70.

As immediately clear from Fig. 3, the point of time at which the pump piston 24 may close the supply bores 82 during its upward stroke can be adjusted by, e.g., twisting the eccentric disk 40, as the position of a tracing roll 84 which may be supported on the end of the pump operating lever 34, may be displaced, e.g., along an approximately horizontal line according to Fig. 3. Assuming that the camshaft 10 rotates clockwise, the pump operating lever 34 with regard to the rotational position of the camshaft 10 may be pivoted upwards all the earlier the further the pump operating lever 34 may be displaced to the left side according to Fig. 3 by twisting the eccentric shaft 42.

In Fig. 4, possible adjustments with the structure according to Fig. 3 are shown, wherein the abscissa shows the cam angle K of the camshaft based on TDC=0° and the ordinate shows the speed of the pump piston 24. The solid line shows the course for a later injection time; the dotted line shows the course for an earlier injection time.

In the illustrated example, it is assumed that the injection start E at full load it about, e.g., -8°, i.e. 8° before TDC. An advanced begin of the injection time of about, e.g., 14°, i.e. adjustment of the injection start to E2, corresponding to about 22° before TDC can be carried out by twisting the eccentric disk 40 and the eccentric shaft 42 respectively. Twisting of the eccentric shaft 42 takes place simultaneously with a displacement of the control rod 80 according to the partial load operation, leading to a twist of the pump piston 24, which in turn is accompanied by a retarded begin of the injection start E 1 about approximately, e.g., 7° to approximately, e.g., 15° before TDC and, at the same time, causes an increase of the speed of the pump piston 24 of about, e.g., 1.8 m/s to approximately, e.g., 3 m/s. A reduced speed of the pump piston at the beginning of the injection at high load is advantageous for low nitrogen oxide emissions. Due to the increase of the piston speed at partial load, a higher injection pressure can be achieved in order to reduce the emission of particulate matter. Therefore, based on a base design, a reversed adjustment of the injection start is carried out at the transition from a high load to a small load, i.e. on the one hand by twisting the eccentric shaft (E to E2) and, on the other hand, by twisting the pump piston (E2 to E1).

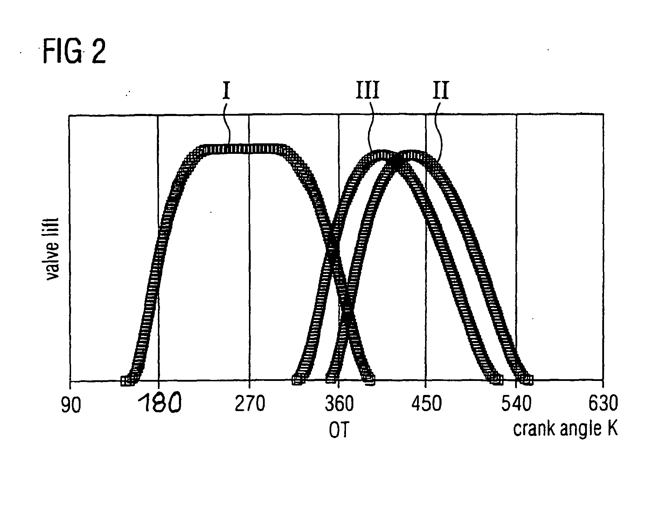

Fig. 2 shows typical valve lifting curves, as can be achieved by the arrangement according to Fig. 1:

Curve 1 exemplatory shows a valve lifting curve for an outlet valve. The outlet valve starts opening clearly before the BDC (180°) at, for example, approximately 140° and closed clearly after the TDC, for example, at about 390°. At regular control of the diesel engine the intake valve starts opening immediately before the TDC and closes immediately after the BDC, according to curve II. At operation in the Miller cycle, which can be achieved by displacing the inlet valve operating lever 26 according to Fig.1 to the left at the illustrated rotating direction of the camshaft 10 in clockwise direction, the valve lifting of the inlet valve on the whole is adjusted to advanced, so that the intake valve opens at approximately 310° cam angle clearly before the TDC and closes at approximately 510°, i.e. clearly before the BDC, according to curve III. If the illustrated advance of the lifting curve of the intake valve is the maximum possible position, the eccentricity of the eccentric disk 36 according to Fig. 1 is adjusted maximal to the right in curve II according to Fig.1 and is adjusted maximal to the left at curve III, i.e. the eccentric shaft 42 is twisted about 180°. In the example of the valve lifting curve according to Fig. 2, the eccentricity of the eccentric disk 38 attached to the outlet valve is substantially 0, so that the valve lifting curve I of the outlet valve is independent of the rotating position of the eccentric shaft 42.

By the way, as an exemplary embodiment of the present disclosure, the first load range and the second load range may represent together the total load range of the internal combustion engine. The first load range may, e.g., represent a low load range of the engine and the second load range may, e.g., represent a middle and high load range of the engine. In an exemplary embodiment of the present disclosure, the first load range may be defined as 0% to 30% of nominal load and the second load range may be defined as 30% to 110% of nominal load.

### Industrial Applicability

In order to realize the method according to the disclosure, advantageously the following operating parameters are chosen:

At stationary operation, i.e. at constant position of the load adjusting member 54, the diesel engine is operated at a load greater than 25% of the full load with the valve lifting curves I and III, i.e. in the Miller cycle, as well as in to fully expanded injection curve of Fig. 4.

At loads below 25% of the full load, the eccentric shaft 42 is twisted, so that the diesel engine is operated with the valve lifting curves I and II and with the injection curve according to the dotted line of Fig. 4.

In order that the diesel engine quickly reacts to an increasing load demand at a load increase of a load range exceeding 30% of the full load, wherein it is operated stationary in the Miller cycle, and supplies the required increased torque, the Miller cycle is switched off and switched to regular operation (curve II) of Fig. 2 as well as dotted curve of Fig. 4, an actual rotational speed of the engine deviates more than 1% to 4% form a set rotational speed or a load control member is moved within a time period of less than 1 sec by a distance corresponding to a distance between 5% and 15% of its movement distance between zero load and full load. Here, the time gradient, above which gradient the Miller cycle is switched off, may be dependent of the respective load point, and may decrease when the load is increasing. The period of time, during which the Miller cycle is switched off, may be dependent of the respective load and may decrease when the load is increasing. The Miller cycle is, for example, switched off for a period of 4 seconds, when, based on a load point of 30% of the full load during 10 seconds, a load requirement is adjusted to full load within 2 seconds.

According to the present disclosure, the advantages of the Miller-method may be used over a maximum load range and the disadvantages of the Miller-method, which lie in an inferior response to increasing load requirements, may be reduced, preferably to a minimum. For example, according to the disclosure, a diesel engine may be operated in the Miller cycle in a medium and upper load range. The deteriorated response to increased load requirements may be suppressed by switching to regular operation when the load requirements are increasing, wherein immediately a higher charging and therefore a higher charge throughput is achieved by - compared to the Miller cycle - later closing of the intake valve, which may results in an instant increase of the torque and preferably an improved response of a turbo charger.

Altogether, the present disclosure may provide a good compromise of cost-effectiveness, exhaust gas quality and response behaviour.

The disclosed method and device may be modified in various ways. A load requirement detection, for example, may be carried out directly via a control rod, the position and the time change of the position being determined by a sensor and supplied to the control device 52 to be analyzed there. In the example illustrated in Fig.1, the sensor 90 for determining the required load and its change is attached directly to the load adjusting member 54. The eccentric shaft 42 may be adjusted proportionally to the respective load, a transition between the curves II and III of Fig.4 taking place continuously and the respective retard taking place in reaction to dynamical changes of the load requirement. The valve lifting curve of the outlet valve I also may be adjusted according to the respective load, by, e.g., an appropriate design of the eccentric disk 38.

The method, according to the disclosure, of switching from the Miller cycle to regular operation at load increase also may be carried out with different generally known devices for adjusting valve timing and injection parameters.

The adjustment of the eccentric shaft 42 may be carried out via different adjusting devices, for example, via a hydraulic cylinder by interconnection of a transmission gear, electromotive, pneumatically, etc.

The structure of Fig. 3, which is shown for a piston cylinder unit, may be extended to several piston cylinder units arranged in a row, by extending the eccentric shaft 42, so that is provided with respective eccentric disks for each of the piston/cylinder units of the diesel engine.

Although the preferred embodiments of this disclosure have been described herein, improvements and modifications may be incorporated without departing from the scope of the following claims.

## Claims

1. A device for controlling the operation of an internal combustion engine, the internal combustion engine operating in a first load range and in a second load range, the second load range being higher than the first load range, and being provided with at least one intake valve (62), a camshaft (10) provided with an intake cam (12) and rotationally driven by a crankshaft, an intake valve operating arrangement (18) configured to operate the intake valve and contacting the intake cam, the device comprising:
a load detecting device (52) constructed to detect the load of the internal combustion engine, and
an adjusting device (50) connected to the load detecting device (52) and configured to adjust the phase between rotation of the camshaft (10) and the closing of the intake valve, wherein, in the second load range of the internal combustion engine, the intake valve is closed in the range of 20° to 45° before the BDC of the piston, according to a Miller cycle, and the operation according to the Miller cycle is switched off at least during a part of a load increase within the second load range,
**characterized in that**
the rotationally driven camshaft (10) is provided with a pump cam (16), the pump cam (16) driving a pump piston (24) of an injection pump (70) via a pump operating arrangement (22) in a reciprocating manner, and
the adjusting device (50) is configured to control the phase between injection start of an injection nozzle (74) and the rotation of the camshaft (10) such that injection of the injection valve is started in the range of 0° to 10° before TDC in the second load range of the internal combustion engine, where the internal combustion engine is controlled according to the Miller cycle, and that the Miller cycle is switched off in a low load range of the internal combustion engine and the injection start of the injection valve is within a range of 10° to 20° before the TDC.

2. The device of claim 1, wherein the first load range of the internal combustion engine is defined by 0% to 30% of nominal load and the second range of the internal combustion engine is defined by 30% to 110% of nominal load.

3. The device of claim 1 or 2, wherein the adjusting device (50) connected to the load detecting device (90) is configured to adjust the phase between rotation of the camshaft (10) and closing of the intake valve in the first load range of the internal combustion engine in a range between a BDCand 20° after the BDC.

4. The device according to one or more of claims 1 to 3, wherein the pump piston (24) is revolvable around an axis of its linear moving direction via an adjusting member (80) and is provided with a control edge (76), wherein a supply rate of the injection pump (70) is adjustable by changing the rotational position of the pump piston (24).

5. The device of one or more of claims 1 to 4, wherein the intake valve operating arrangement (18) comprises an intake valve operating lever (26) determining a stroke of the intake cam (12),
the pump operating arrangement (22) comprises a pump operating lever (34) determining the stroke of the pump cam (16), and
the intake valve operating lever and the pump operating lever are supported on eccentric disks (36, 40) of an eccentric shaft (42).

6. The device according to claim 5, wherein the eccentric shaft (42) is provided with a further eccentric disk (38), on which further eccentric disk (38) an outlet valve operating lever (30) is supported.

7. The device of claim 5 or 6, wherein the rotational position of the eccentric shaft (42) is configured to be adjusted via the adjusting device (50).

8. The device of claims 5 to 7, wherein the device is configured to be used in a diesel engine provided with a plurality of piston/cylinder units, wherein valve operating levers and pump operating levers of said piston/cylinder units are supported on a common eccentric shaft.

## Patentansprüche

1. Vorrichtung zum Steuern des Betriebs einer Brennkraftmaschine mit innerer Verbrennung, wobei die Brennkraftmaschine mit innerer Verbrennung in einem ersten Lastbereich und einem zweiten Lastbereich, der höher als der erste Lastbereich ist, arbeitet und mit wenigstens einem Einlassventil (62), einer Nockenwelle (10), die mit einem Einlassnocken (12) versehen ist und drehend durch eine Kurbelwelle angetrieben wird, eine Einlassventil-Betätigungsanordnung (18), die zum Betätigen des Einlassventils konfiguriert ist und den Einlassnocken kontaktiert, versehen ist, wobei die Vorrichtung aufweist:
eine Lasterfassungsvorrichtung (52), die zum Erfassen der Last der Brennkraftmaschine mit innerer Verbrennung ausgebildet ist, und
eine Einstellvorrichtung (50), die mit der Lasterfassungsvorrichtung (52) verbunden ist und zum Einstellen der Phase zwischen einer Drehung der Nockenwelle (10) und dem Schließen des Einlassventils konfiguriert ist, wobei, in dem zweiten Lastbereich der Brennkraftmaschine mit innerer Verbrennung, das Einlassventil in dem Bereich von 20° bis 45° vor dem unteren Totpunkt des Kolbens gemäß eines Miller-Zyklus geschlossen wird und der Betrieb gemäß dem Miller-Zyklus zumindest während eines Teils einer Lasterhöhung innerhalb des zweiten Lastbereichs ausgeschaltet wird,
**dadurch gekennzeichnet, dass**
die drehend angetriebene Nockenwelle (10) mit einem Pumpennocken (16) versehen ist, wobei der Pumpennocken (16) einen Pumpenkolben (24) einer Einspritzpumpe (70) über eine Pumpen-Betätigungsanordnung (22) hin- und herbewegend antreibt, und
die Einstellvorrichtung (50) zum Steuern der Phase zwischen einem Einspritzungsbeginn einer Einspritzdüse (74) und der Drehung der Nockenwelle (10) derart konfiguriert ist, dass eine Einspritzung des Einspritzventils in dem Bereich von 0° bis 10° vor dem oberen Totpunkt in dem zweiten Lastbereich der Brennkraftmaschine mit innerer Verbrennung gestartet wird, wo die Brennkraftmaschine mit innerer Verbrennung gemäß dem Miller-Zyklus gesteuert wird, und dass der Miller-Zyklus in einem niedrigen Lastbereich der Brennkraftmaschine mit innerer Verbrennung ausgeschaltet wird und der Einspritzungsbeginn des Einspritzventils innerhalb eines Bereichs von 10° bis 20° vor dem oberen Totpunkt liegt.

2. Vorrichtung nach Anspruch 1, wobei der erste Lastbereich der Brennkraftmaschine mit innerer Verbrennung durch 0 % bis 30 % einer Nennlast festgelegt ist und der zweite Bereich der Brennkraftmaschine mit innerer Verbrennung durch 30 % bis 110 % einer Nennlast festgelegt ist.

3. Vorrichtung nach Anspruch 1 oder 2, wobei die Einstellvorrichtung (50), die mit der Lasterfassungsvorrichtung (90) verbunden ist, zum Einstellen der Phase zwischen einer Drehung der Nockenwelle (10) und dem Schließen des Einlassventils in dem ersten Lastbereich der Brennkraftmaschine mit innerer Verbrennung in einem Bereich zwischen einem unteren Totpunkt und 20° nach dem unteren Totpunkt konfiguriert ist.

4. Vorrichtung nach einem oder mehreren der Ansprüche 1 bis 3, wobei der Pumpenkolben (24) über ein Einstellelement (80) um eine Achse in seiner linearen Bewegungsrichtung drehbar ist und mit einer Steuerkante (76) versehen ist, wobei eine Zufuhr der Einspritzpumpe (70) durch Ändern der Drehstellung des Pumpenkolbens (24) einstellbar ist.

5. Vorrichtung nach einem oder mehreren der Ansprüche 1 bis 4, wobei die Einlassventil-Betätigungsanordnung (18) einen Einlassventil-Betätigungshebel (26), der einen Hub des Einlassnockens (12) bestimmt, aufweist,
wobei die Pumpen-Betätigungsanordnung (22) einen Pumpen-Betätigungshebel (34), der den Hub des Pumpennockens (16) bestimmt, aufweist und
wobei der Einlassventil-Betätigungshebel und der Pumpen-Betätigungshebel auf Exzenterscheiben (36, 40) einer Exzenterwelle (42) gelagert sind.

6. Vorrichtung nach Anspruch 5, wobei die Exzenterwelle (42) mit einer weiteren Exzenterscheibe (38) versehen ist, wobei auf der weiteren Exzenterscheibe (38) ein Auslassventil-Betätigungshebel (30) gelagert ist.

7. Vorrichtung nach Anspruch 5 oder 6, wobei die Drehstellung der Exzenterwelle (42) zum Einstellen durch die Einstellvorrichtung (50) konfiguriert ist.

8. Vorrichtung nach den Ansprüchen 5 bis 7, wobei die Vorrichtung zum Verwenden in einem Dieselmotor konfiguriert ist, der mit einer Mehrzahl von Kolben-/Zylindereinheiten versehen ist, wobei Ventil-Betätigungshebel und Pumpen-Betätigungshebel der Kolben-/ Zylindereinheiten auf einer gemeinsamen Exzenterwelle gelagert sind.

## Revendications

1. Dispositif pour commander le fonctionnement d'un moteur à combustion interne, le moteur à combustion interne fonctionnant dans une première plage de charges et dans une seconde plage de charges, la seconde plage de charges étant supérieure à la première plage de charges, et étant alimenté par au moins une soupape d'admission (62), un arbre à came (10) pourvu d'une came d'admission (12) et entraîné en rotation par un vilebrequin, un aménagement (18) de commande de la soupape d'admission étant configuré pour commander la soupape d'admission et venir en contact avec la came d'admission, le dispositif comprenant :
un dispositif de détection de charge (52) construit de manière à détecter la charge du moteur à combustion interne, et
un dispositif de réglage (50) raccordé au dispositif de détection de charge (52) et configuré pour régler la phase entre la rotation de l'arbre à came (10) et la fermeture de la soupape d'admission, dans lequel, dans la seconde plage de charges du moteur à combustion interne, la soupape d'admission est fermée dans la plage de 20 ° à 45 ° avant le PMB du piston, selon un cycle de Miller, et le fonctionnement selon le cycle de Miller est désactivé au moins pendant une partie de l'augmentation de charge dans la seconde plage de charges,
**caractérisé en ce que**
l' arbre à cames entraîné en rotation (10) est pourvu d'une came de pompe (16), la came de pompe (16) entraînant un piston de pompe (24) d'une pompe à injection (70) par le biais d'un aménagement de commande de pompe (22) en mode de va-et-vient, et
le dispositif de réglage (50) est configuré pour commander la phase entre le début de l'injection d'une buse d'injection (74) et la rotation de l'arbre à came (10), de sorte que l'injection de la soupape d'injection démarre dans la plage de 0 ° à 10 ° avant le PMH dans le seconde plage de charges du moteur à combustion interne, le moteur à combustion interne étant commandé selon le cycle de Miller et le cycle de Miller étant désactivé dans une plage de faibles charges du moteur à combustion interne et le début de l'injection de la soupape d'injection se situe dans une plage de 10 ° à 20 ° avant le PMH.

2. Dispositif selon la revendication 1, dans lequel la première plage de charges du moteur à combustion interne est définie par 0 % à 30 % de charge nominale et la seconde plage de charges du moteur à combustion interne est définie par 30 % à 110 % de charge nominale.

3. Dispositif selon la revendication 1 ou 2, dans lequel le dispositif de réglage (50) est raccordé au dispositif de détection de charge (90) et configuré pour régler la phase entre la rotation de l'arbre à came (10) et la fermeture de la soupape d'admission, dans la première plage de charges du moteur à combustion interne, dans une plage comprise entre le PMB et 20 ° après le PMB.

4. Dispositif selon une ou plusieurs des revendications 1 à 3, dans lequel le piston de pompe (24) peut tourner autour d'un axe de sa direction de mouvement linéaire par le biais d'un élément de réglage (80) et est doté d'un bord de commande (76), dans lequel un débit d'alimentation de la pompe à injection (70) est réglage en changeant la position de rotation du piston de pompe (24).

5. Dispositif selon une ou plusieurs des revendications 1 à 4, dans lequel l'aménagement (18) de commande de la soupape d'admission comprend un levier de commande (26) de la soupape d'admission déterminant une course de la came d'admission (12),
l'aménagement (22) de commande de la pompe comprend un levier (34) de commande de la pompe déterminant la course de la came de pompe (16), et
le levier de commande de la soupape d'admission et le levier de commande de la pompe sont supportés sur des disques excentriques (36, 40) d'un arbre à excentrique (42).

6. Dispositif selon la revendication 5, dans lequel l'arbre à excentrique (42) est pourvu d'un autre disque excentrique (38), disque excentrique supplémentaire (38) sur lequel est supporté un levier de commande (30) de la soupape d'échappement.

7. Dispositif selon la revendication 5 ou 6, dans lequel la position en rotation de l' arbre à excentrique (42) est configurée pour être réglée par le dispositif de réglage (50).

8. Dispositif selon les revendications 5 à 7, dans lequel le dispositif est configuré pour être utilisé dans un moteur diesel pourvu d'une pluralité d'unités piston/cylindre, dans lequel les leviers de commande de la soupape et les leviers de commande de la pompe desdites unités piston/cylindre sont supportés sur un arbre excentrique commun.
